# EUROPÄISCHE PATENTANMELDUNG

(11) **EP 1 798 087 A2**
(43) Veröffentlichungstag der Anmeldung: **20.06.2007**
(21) Anmeldenummer: 06025628.6
(22) Anmeldetag: 12.12.2006
(51) Int. Cl.: B60J 7/12

(54) **Cabriosystem mit zwei im geschlossenen Zustand hintereinander angeordneten starren Dachteilen**

(30) Priorität: 19.12.2005 DE 102005061201
(71) Anmelder: Rausch und Pausch GmbH, 95100 Selb (DE)
(72) Erfinder: Wagner, Tobias, 21149 Hamburg (DE)
(74) Vertreter: Donath, Dirk

(57) **Zusammenfassung**

Die Erfindung betrifft ein Cabriosystem mit mindestens zwei starren Dachteilen, von denen ein hinteres Dachteil einerseits an der Karosserie schwenkbar gelagert und andererseits mit einem vorderen Dachteil gelenkig verbunden ist, wobei für jedes Dachteil ein Antriebsmittel für eine koordinierte Öffen- und Schließbewegung beider Dachteile vorgesehen ist, von denen mindestens ein Antriebsmittel ein Kolben-Zylinder-System mit einem festen und einem beweglichen Bauteil ist. Ein technologisch einfaches von der Form und Größe der Dachteile unabhängiges Antriebsmittel ergibt sich, wenn das feste Bauteil des Kolben-Zylinder-Systems am hinteren oder vorderen Dachteil befestigt ist, wenn mit dem festen Bauteil des Kolben-Zylinder-Systems ein Führungsbauteil für einen am beweglichen Bauteil des Kolben-Zylinder-Systems befestigten Führungskörper starr verbunden ist und wenn am Führungsbauteil sich ein Lager für einen Hebel befindet, der einerseits mit dem vorderen oder hinteren Dachteil verbunden und an dem andererseits ein Verbindungsstück zwischen dem Führungskörper und dem Hebel angelenkt ist.

## Beschreibung

Die Erfindung betrifft ein Cabriosystem mit zwei im geschlossenen Zustand hintereinander angeordneten starren Dachteilen gemäß dem Oberbegriff des ersten Patentanspruchs.

Bekannt sind Cabriosysteme mit komplexen Mehrgelenkkinematiken, die in der Regel von Hydraulikzylindern angetrieben werden und die Drehbewegungen mit Lenkern auf die zu bewegenden Dachteile übertragen, siehe DE 10111705 A1, EP 0749859 A1.
Weiterhin ist die Verwendung von Schwenkmotoren als Aktuatoren bekannt, die im Hauptlager an der Karosserie fest und/oder an wichtigen Gelenkstellen zwischen den starren Dachteilen beweglich angeordnet sind und elektrisch oder hydraulisch angetrieben werden, siehe EP 1160113 A2.
Die Bewegung der vorderen starren Dachteile von Faltverdecken wird über einen Viergelenkmechanismus zwangsgesteuert eingeleitet, dessen Bauteile speziell für das jeweilige Dach ausgelegt sind. Eine multivalente Nutzung des Viergelenkmechanismus bei anders geformten oder dimensionierten Fahrzeugdächern ist nicht möglich. Darüber hinaus ist das an der Drehachse wirkende Antriebsdrehmoment über den Bewegungsbereich der Dachteile starken Schwankungen unterworfen und ist besonders in den Endlagen des Bewegungsbereichs sehr niedrig. Die Kinematikbauteile können nicht oder nur mit sehr hohem Aufwand verkleidet werden.
Schwenkmotoren ermöglichen zwar den notwendigen Schwenkwinkel und das erforderliche konstante Drehmoment, sie lassen sich aber bauartbedingt nicht außerhalb des Sichtbereiches des Daches anbringen, weil die Drehachse des vorderen Dachteils sehr tief angeordnet sein muss.

Die vorliegende Erfindung soll die vorstehend aufgezeigten Mängel beheben und ein Antriebssystem für die einzelnen Dachteile ermöglichen, das wenig Raum beansprucht, einfach herstellbar und montierbar sowie von ihrer Form und Größe grundsätzlich unabhängig und deshalb multivalent nutzbar ist.

Gemäß der Erfindung wird diese Aufgabe durch die kennzeichnenden Merkmale des ersten bzw. zweiten Patentanspruchs gelöst und durch vorteilhafte Ausgestaltungen gemäß den Unteransprüchen ergänzt. Dabei ist die Erfindung bei entsprechender Ausgestaltung grundsätzlich auch auf Cabriodächer anwendbar, die aus mehr als zwei miteinander verbundenen und bewegbaren starren Teilen bestehen. Die Antriebsmittel für die Dachteile sind günstiger Weise beidseitig vorgesehen. Vorteilhaft ist die Führung als Kulisse ausgebildet, in der das Element nach Art eines Gleitsteins gleitet. Das Lager für den Hebel, das gleichzeitig das sich mit dem hinteren Dachteil schwenkende Drehlager des vorderen Dachteils ist, befindet sich am Kulissenrahmen seitlich zur Längsausdehnung der Führung, die ihrerseits regelmäßig als Geradführung gestaltet ist. Das Verbindungsstück ist grundsätzlich kürzer als die Führung ausgebildet. Im Rahmen der Erfindung liegt es, den Zylinder gegenüber dem festen Kolben zu bewegen, wobei dann auch die Führung mit dem Kolben und das geführte Element mit dem Zylinder verbunden sein könnte. Für die simultane und koordinierte Betätigung der verschiedenen Antriebsmittel ist eine Steuerung vorgesehen.
Die Vorteile der Erfindung liegen in dem weitgehend gleichmäßigen Drehmoment an der Drehachse des vorderen Dachteils, in der schlanken Bauweise für die Antriebsmittel und ihre einfache Integration in das Fahrzeugdach, in der Vermeidung eines sonst üblichen Hauptlenkers und der damit verbundenen optimalen Gestaltungsmöglichkeit der inneren Dachverkleidung und schließlich in der Realisierung eines großen Drehwinkels (180°), der eine universelle Einsetzbarkeit des Fluidzylinders ermöglicht. Grundsätzlich kann die Zylinder-Kolben-Kombination auf Flüssigkeits- oder Gasbasis bzw. elektrisch betrieben werden.

Die Erfindung wird nachstehend an Hand einer schematischen Zeichnung näher erläutert. Es zeigen:
- Fig. 1: ein erfindungsgemäßes Cabriosystem,

- Fig. 2: das Cabriosystem in halbgeöffneter Stellung,
- Fig. 3: das Cabriosystem in geöffneter (abgelegter) Stellung,
- Fig.4: das perspektivisch dargestellte erfindurigsgemäße Antriebsmittel für das vordere Dachteil in Ausgangslage,
- Fig. 5: das Antriebsmittel gemäß Fig.4 in einer der Fig. 2 entsprechenden Zwischenlage und
- Fig. 6: das Antriebsmittel gemäß Fig. 4 in einer der Fig. 3 entsprechenden Endlage.

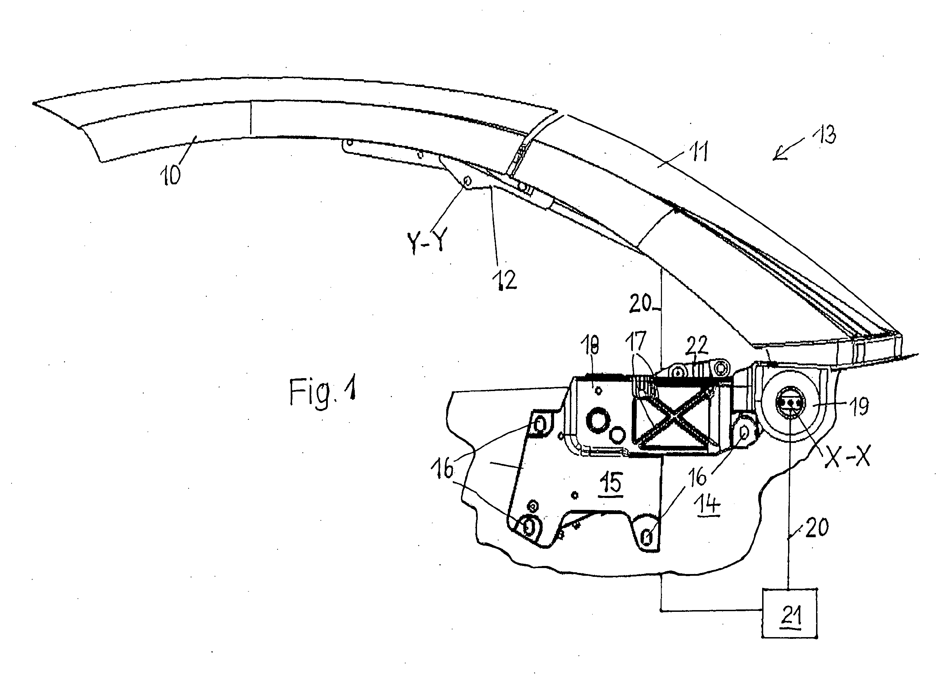

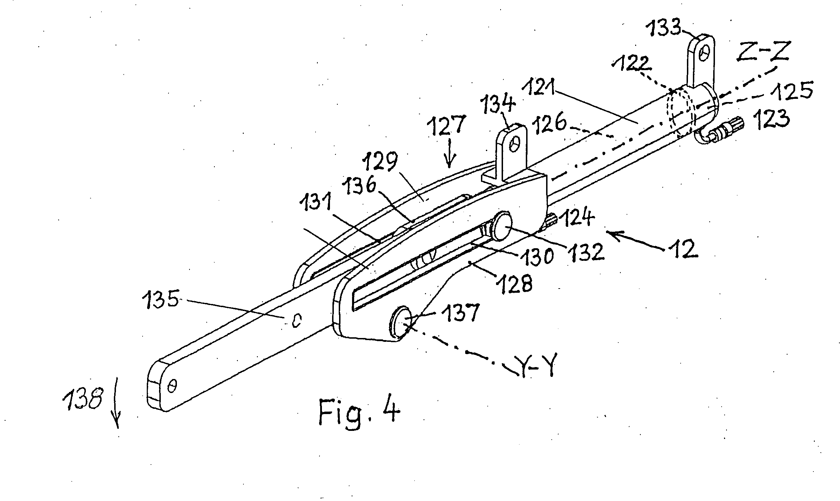

In Fig. 1 ist ein zwei starre Dachteile 10, 11 und ein Antriebsmittel 12 aufweisendes Cabriosystem 13 dargestellt, das an einer andeutungsweise erkennbaren Karosserie 14 um eine rechtwinklig zur Zeichenebene gerichtete Achse X-X an einem Hauptlager 15 schwenkbar gelagert ist. Das Hauptlager 15 ist an Stellen 16 mit der Fahrzeugkarosserie 14 verbunden, bspw. verschraubt, und trägt an einer mit Versteifungsrippen 17 versehenen Konsole 18 einen Flüssigkeitsantrieb 19 für das hintere Dachteil 11, das mit dem Flüssigkeitsantrieb 19 starr verbunden ist. Der Flüssigkeitsantrieb 19 wird wie das Antriebsmittel 12, das auch ein Flüssigkeitsantrieb ist, über Leitungen 20 von einer Steuereinheit 21 gesteuert. Das in den Figuren 4 bis 6 näher beschriebene Antriebsmittel 12 ist mit beiden Dachteilen 10, 11 fest verbunden und bewirkt die Schwenkung des Dachteils 10 um eine zur Achse X-X parallele Achse Y-Y gegenüber dem Dachteil 11. Der Flüssigkeitsantrieb 19 kann auch durch einen Elektroantrieb ersetzt werden. Auch in diesem Fall werden beide Antriebe 12 und 19 durch die Steuereinheit synchronisiert. In Fig. 1 sind noch Bewegungsmittel 22 für die im Übrigen nicht dargestellte Hutablage vorgesehen. Es versteht sich von selbst, dass das Hauptlager 15 und die Antriebsmittel 12, 19 beiderseits an einer Fahrzeugkarosserie 14 vorgesehen sind.

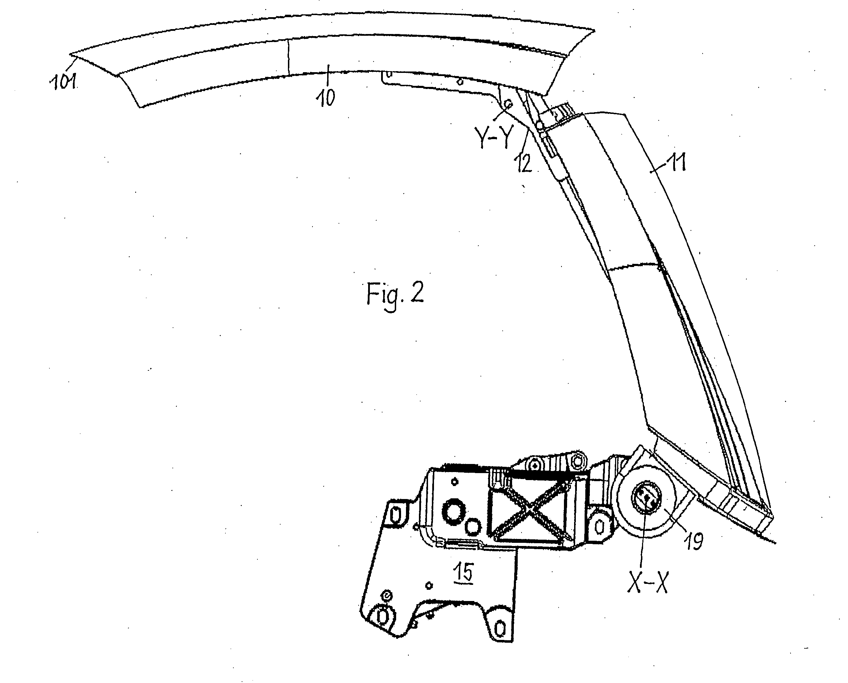

In Fig. 1 ist das Cabriosystem 13 in der Ausgangslage "Schließstellung" dargestellt. Fig. 2 zeigt ein teilweise geöffnetes Cabriosystem. Das hintere Dachteil 11 ist mit dem Flüssigkeitsantrieb 19 deutlich gegenüber der Ausgangslage verschwenkt. Gleichzeitig hat das vordere Dachteil 10 durch die bewegungskoordinierende Wirkung der nur in Fig. 1 dargestellten Steuereinheit 21 eine Schwenkung um die Achse Y-Y erfahren, durch die sich die vom Dachteil 11 abliegende Seite 101 des Dachteils 10 dem Dachteil 11 und der Schwenkachse X-X nähert. Das Cabriodach 10, 11 erfährt mit anderen Worten eine Knickung um die Achse Y-Y.

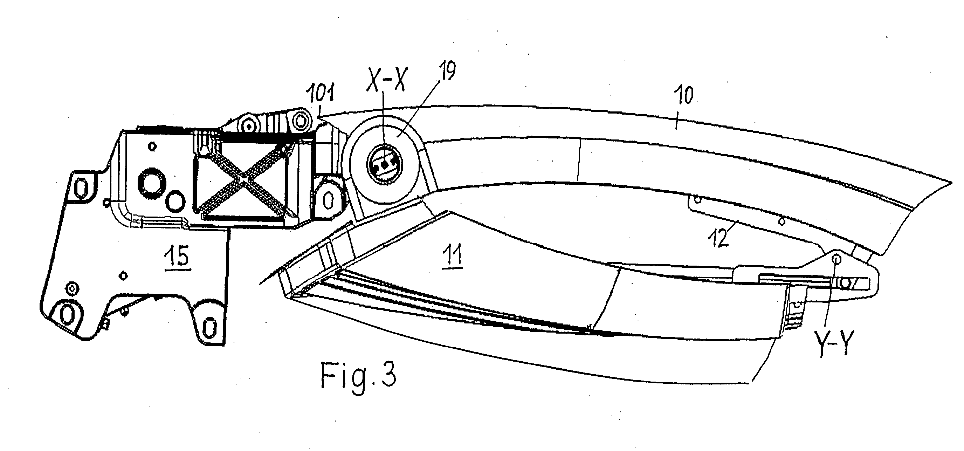

In Fig. 3 hat das Cabriosystem 13 die Endlage seines Bewegungsablaufs erreicht. Das Dachteil 10 befindet sich nach Knickung um die raumbewegliche Achse Y-Y in nahezu antiparalleler Lage zum Dachteil 11, das seinerseits um die Achse X-X eine Schwenkung erfahren hat, die zwischen 90° und 180° liegt. Dabei kommt die abliegende Seite 101 in die Nähe des Antriebs 19 zu liegen.

Die Figuren 4 bis 6 zeigen die Antriebsmittel 12 in zu den Dachteilen 10, 11 in den Figuren 1 bis 3 analogen Positionen. In Fig. 4 ist ein Fluidzylinder 121 mit einem verstellbaren Kolben 122 und Einlässen 123, 124 für eine Flüssigkeit oder ein Gas in die durch den Kolben 122 im Zylinder 121 gebildeten und veränderbaren Kammern 125, 126 versehen. Am Zylinder 121 ist eine Kulissenführung 127 fest angebracht, die in zwei parallel zueinander und zur geometrischen Achse Z-Z des Zylinders 121 verlaufenden Schenkeln 128, 129 Führungsschlitze 130, 131 für einen Führungskörper 132 aufweisen, der mit dem Kolben 122 bspw. über eine nicht sichtbare Stange in Verbindung steht. Mit dem Zylinder 121 bzw. mit der Kulissenführung 127 sind Laschen 133, 134 starr verbunden, mit denen das Antriebsmittel 12 am Dachteil 11 so befestigt wird, dass die Zylinderachse Z-Z im Wesentlichen in Bewegungsrichtung der Dachteile 10, 11 liegt. An und zwischen den Schenkeln 128, 129 ist um die raumbewegliche Achse Y-Y ein zweiarmiger Hebel 135 schwenkbar gelagert, der an seinem kürzeren Ende über ein aus zwei Schwingen 136 bestehendes Verbindungsstück mit dem Führungskörper 132 und der verdeckten Kolbenstange in Verbindung steht. Der Lagerung des zweiarmigen Hebels 135 zwischen den Schenkeln 128, 129 dient ein Lagerbolzen 137, der unterhalb der Führungsschlitze 130, 131 in die Schenkel 128, 129 eingeschraubt ist. Am längeren Ende ist der zweiarmige Hebel 135 mit dem Dachteil 10 starr verbunden. Die gesamte Anordnung ist in diesem Ausführungsbeispiel so getroffen, dass die Antriebsmittel 12 und die Dachteile 10, 11 eine gemeinsame Bewegungsebene haben.

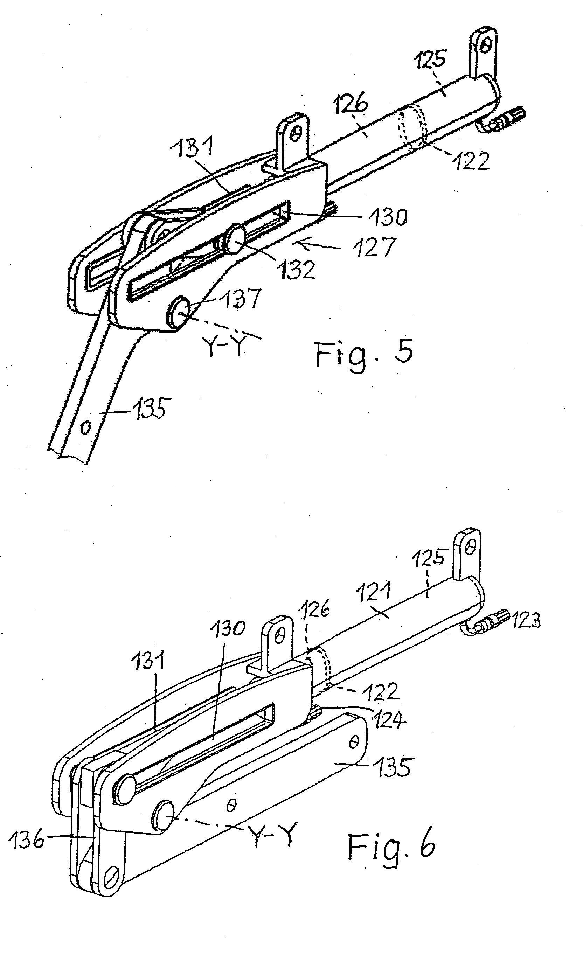

Soll das Cabriodach geöffnet werden, so wird entsprechend der Funktion der Steuereinheit 21 von einem nicht dargestellten Reservoir ein Fluidum durch den Einlass 123 in die Kammer 125 gedrückt und damit der Kolben 122 im Zylinder 121 in Richtung des Einlasses 124 bewegt. Der Führungskörper 132 wird in Folge dessen in der Kulissenführung 127 zum anderen Führungsende hin bewegt und der mit seinem längeren Ende gegenüber der Achse Z-Z leicht geneigte Doppelhebel 135 über die Schwingen 136 um die Achse Y-Y in Richtung eines Pfeils 138 weiter gedreht. Damit ergibt sich eine Zwischenlage, wie sie bspw. aus Fig. 5 entnehmbar ist, in welcher der Führungskörper 132 in den Führungsschlitzen 130, 131 so verschoben ist, dass die Schwingen 136 das kürzere Ende des zweiarmigen Hebels 135 aus der Kulissenführung 127 heraus nach oben drücken und so den Hebel 135 um den Lagerbolzen 137 schwenken. Wenn der Kolben 122 im Zylinder 121 und der Führungskörper 132 in den Führungsschlitzen 130, 131 ihre in Fig. 6 erkennbaren Endlagen erreichen, sind die Schwingen 136 im Wesentlichen rechtwinklig und der Hebel 135 im Wesentlichen antiparallel zur Achse Z-Z gerichtet. Dieser Sachverhalt entspricht der Fig. 3, wobei allerdings zu beachten ist, dass synchron zur Schwenkung des Hebels 135 eine etwa gleich große, aber entgegengesetzte Schwenkung des Dachteils 11 um die Achse X-X stattfindet, an dem das Antriebsmittel 12 befestigt ist. Dadurch kommt das Dachteil 10 im Zustand der Ablage über das Dachteil 11 zu liegen.
Wird durch den Einlass 124 ein Fluidum in die Kammer 126 gedrückt, so findet der Bewegungsvorgang in umgekehrter Richtung und Reihenfolge statt bis sich die Dachteile 10, 11 in Schließstellung befinden.

Es versteht sich von selbst, dass die Erfindung nicht an die dargestellte Ausführungsform gebunden ist. So kann bspw. das Kolben-Zylinder-System nicht nur mit Hilfe einer Flüssigkeit oder eines Gases, sondern auch elektrisch betrieben werden. Dabei kann der Zylinder 121 am Dachteil 10 befestigt und der Kolben 122 mit dem Dachteil 11 verbunden sein. Auch kann bei entsprechender Anpassung der Antriebsmittel 12 der Zylinder 121 sich gegenüber dem Kolben 122 bewegen. Die Endstellungen des Bewegungsablaufs müssen nicht um 180° oder nahezu 180° auseinander liegen. Das Zwischenstück 136 muss nicht die Form zweier Schwingen aufweisen und die Kulissenführung 127 nicht zweischenklig sein, um nur einige abweichende Gestaltungsmöglichkeiten der Erfindung zu nennen.

### Bezugszeichenliste

- 10, 11: Dachteile
- 12: Antriebsmittel
- 13: Cabriosystem
- 14: Karosserie
- 15: Hauptlager
- 16: Stellen der Verbindung
- 17: Versteifungsrippen
- 18: Konsole
- 19: Flüssigkeitsantrieb
- 20: Leitungen
- 21: Steuereinheit
- 22: Bewegungsmittel
- 101: abliegende Seite
- 121: Fluidzylinder
- 122: Kolben
- 123, 124: Einlässe
- 125, 126: Kammern
- 127: Kulissenführung
- 128, 129: Schenkel
- 130, 131: Führungsschlitze
- 132: Führungskörper
- 133, 134: Laschen
- 135: Hebel
- 136: Schwingen
- 137: Lagerbolzen
- 138: Pfeil
- X-X, Y-Y, Z-Z: Achsen

## Patentansprüche

1. Cabriosystem mit mindestens zwei starren Dachteilen, von denen ein hinteres Dachteil einerseits an der Karosserie schwenkbar gelagert und andererseits mit einem vorderen Dachteil gelenkig verbunden ist, wobei für jedes Dachteil ein Antriebsmittel für eine koordinierte Öffen- und Schließbewegung beider Dachteile vorgesehen ist, von denen mindestens ein Antriebsmittel ein Kolben-Zylinder-System mit einem festen und einem beweglichen Bauteil ist, **dadurch gekennzeichnet, dass** am hinteren Dachteil das feste Bauteil des Kolben-Zylinder-Systems befestigt ist, dass mit dem festen Bauteil des Kolben-Zylinder-Systems ein Führungsbauteil für einen am beweglichen Bauteil des Kolben-Zylinder-Systems befestigten Führungskörper starr verbunden ist und dass am Führungsbauteil sich ein Lager für einen Hebel befindet, der einerseits mit dem vorderen Dachteil verbunden und an dem andererseits ein Verbindungsstück zwischen dem Führungskörper und dem Hebel angelenkt ist.

2. Cabriosystem mit mindestens zwei starren Dachteilen, von denen ein hinteres Dachteil einerseits an der Karosserie schwenkbar gelagert und andererseits mit einem vorderen Dachteil gelenkig verbunden ist, wobei für jedes Dachteil ein Antriebsmittel für eine koordinierte Öffen- und Schließbewegung beider Dachteile vorgesehen ist, von denen mindestens ein Antriebsmittel ein Kolben-Zylinder-System mit einem festen und einem beweglichen Bauteil ist, **dadurch gekennzeichnet, dass** am vorderen Dachteil das feste Bauteil des Kolben-Zylinder-Systems befestigt ist, dass mit dem festen Bauteil des Kolben-Zylinder-Systems ein Führungsbauteil für einen am beweglichen Bauteil des Kolben-Zylinder-Systems befestigten Führungskörper starr verbunden ist, dass am Führungsbauteil sich ein Lager für einen Hebel befindet, der einerseits mit dem hinteren Dachteil verbunden und an dem andererseits ein Verbindungsstück zwischen dem Führungskörper und dem Hebel angelenkt ist.

3. Cabriosystem gemäß Anspruch 1 oder 2, **dadurch gekennzeichnet, dass** die Führung eine Geradführung ist.

4. Cabriosystem gemäß Anspruch 3, **dadurch gekennzeichnet, dass** die Führung eine Kulisse ist.

5. Cabriosystem Anspruch 1 oder 2, **dadurch gekennzeichnet, dass** das Lager im Führungsbauteil sich unterhalb der Führung befindet.

6. Cabriosystem Anspruch 1 oder 2, **dadurch gekennzeichnet, dass** das Verbindungsstück kürzer als die Führung ausgebildet ist.

7. Cabriosystem Anspruch 1 oder 2, **dadurch gekennzeichnet, dass** das Verbindungsstück aus zwei Schwingen besteht.
